(19) **Europäisches Patentamt / European Patent Office / Office européen des brevets**

(11) **EP 3 053 317 B1**

(12) **EUROPÄISCHE PATENTSCHRIFT**

(45) Veröffentlichungstag und Bekanntmachung des Hinweises auf die Patenterteilung:
**13.06.2018 Patentblatt 2018/24**

(21) Anmeldenummer: **14776588.7**

(22) Anmeldetag: **24.09.2014**

(51) Int Cl.:
*H04L 29/06* (2006.01)  *H04W 12/06* (2009.01)
*H04L 29/08* (2006.01)

(86) Internationale Anmeldenummer:
**PCT/EP2014/002595**

(87) Internationale Veröffentlichungsnummer:
**WO 2015/043744 (02.04.2015 Gazette 2015/13)**

(54) **VERFAHREN ZUR AUTHENTISIERUNG GEGENÜBER EINEM SERVER**

METHOD FOR AUTHENTICATION WITH RESPECT TO A SERVER

PROCÉDÉ D'AUTHENTIFICATION VIS-À-VIS D'UN SERVEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.09.2013 DE 102013016338**

(43) Veröffentlichungstag der Anmeldung:
**10.08.2016 Patentblatt 2016/32**

(73) Patentinhaber: **Giesecke+Devrient Mobile Security GmbH**
**81677 München (DE)**

(72) Erfinder: **BAKDI, Idir**
**81927 München (DE)**

(56) Entgegenhaltungen:
**EP-A1- 2 421 217      WO-A2-2009/101549**
**US-A1- 2010 037 046      US-A1- 2011 219 427**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Gebiet der Erfindung

Die Erfindung betrifft Verfahren, Vorrichtungen und ein System zur Authentisierung gegenüber einem Server. Insbesondere betrifft die Erfindung Verfahren, Vorrichtungen und ein System zur Authentisierung gegenüber einem Webserver mittels eines mobilen Endgeräts mit einem Sicherheitelement.

Hintergrund der Erfindung

Eine Vielzahl von Diensten im World Wide Web sind durch sogenannte Credentials in der Regel in Form eines Passworts geschützt, d.h. um auf einen solchen passwortgeschützten Webdienst, z.B. einen E-Mail-Dienst, zugreifen zu können, muss ein Benutzer sich gegenüber dem Webdienst authentisieren, indem er seine Credentials, d.h. einen Benutzernamen und ein dazugehöriges Passwort eingibt. Da es aus Sicherheitsgründen ratsam ist, für unterschiedliche passwortgeschützte Webdienste unterschiedliche Passwörter zu verwenden, und unterschiedliche passwortgeschützte Webdienste unterschiedliche Anforderungen an die Ausgestaltung des Passworts haben können, z.B. Groß- und Kleinschreibung, mindestens eine Ziffer und/oder ein Sonderzeichen im Passwort, kann es häufig vorkommen, dass ein Benutzer für unterschiedliche Webdienste sich unterschiedliche Benutzernamen und/oder Passwörter merken muss. Hier kann das Problem auftreten, dass ein Benutzer ein Passwort für einen Webdienst verwechselt oder vergisst.

Vor diesem Hintergrund stellt sich der vorliegenden Erfindung die Aufgabe, verbesserte Verfahren und Vorrichtungen sowie ein verbessertes System zur Authentisierung eines Benutzers gegenüber einem Webserver bereitzustellen, mit denen die vorstehend beschriebenen Nachteile behoben werden.

WO 2009/101549 A2 beschreibt ein Registrierungsverfahren eines Benutzers bei einem Dienstanbieter, wobei das Verfahren die Schritte umfasst eines Erzeugens und Speicherns mindestens einer digitalen Identität auf einem mobilen Gerät, einer Herstellung einer Kommunikationsverbindung zwischen dem mobilen Gerät und dem Dienstanbieter, eines Austauschs von Informationen zwischen dem mobilen Gerät und dem Dienstanbieter um geheime Daten zu erzeugen, welche sich sowohl auf eine gewählte digitale Identität als auch auf den Dienstanbieter beziehen, und eines Speicherns der geheimen Daten sowohl auf dem mobilen Gerät als auch beim Dienstanbieter.

EP 2 421 217 A1 beschreibt ein Kommunikationssystem und ein entsprechendes mobiles Kommunikationsgerät, wobei das System einen Server aufweist, der konfiguriert ist, um einen Datenzugriff zur Verfügung zu stellen, auf der Basis eines authentisierten Logons, und das System neben dem Server einen Computer aufweist, welcher auf den Server zugreift, um eine temporär authentisierte Logon-Identifikation für den Server zu empfangen. US 2010/0037046 A1 beschreibt ein zentralisiertes Zugangsdatenverwaltungssystem. Zugangsdaten für eine Website werden in einem gesicherten Bereich gespeichert. Die Zugangsdaten für eine Website sind verschlüsselt auf der Grundlage eines Schlüssels, der nicht im gesicherten Bereich abgelegt ist, und dienen zum Authentisieren eines Benutzers auf einer Website eines Dritten.

US 2011/0219427 A1 beschreibt Techniken zum Vereinfachen eines Authentisierungsverfahrens aus der Sicht eines Benutzers, während gleichzeitig eine verbesserte Sicherheit für viele Benutzer zur Verfügung gestellt wird, welche keine oder nur schwache Sicherheitstechniken verwenden.

Zusammenfassung der Erfindung

Die vorstehende Aufgabe wird gemäß der vorliegenden Erfindung durch den jeweiligen Gegenstand des unabhängigen Anspruches 1 gelöst. Bevorzugte Ausgestaltungen der Erfindung werden in den abhängigen Ansprüchen definiert.

Gemäß einem ersten Aspekt der Erfindung wird ein Verfahren zur Authentisierung eines Benutzers einer Computereinheit gegenüber einem Server bereitgestellt, wobei das Verfahren die folgenden Schritte umfasst: das Anfordern eines passwortgeschützten Zugriffs auf den Server durch die Computereinheit; das Ausgeben eines Codes durch die Computereinheit, der eine Adresse URL des Servers enthält; das Erfassen des Codes und das Extrahieren der Adresse URL des Servers aus dem Code durch ein mobiles Endgerät; das Bestimmen eines in einem Sicherheitselement des mobilen Endgeräts in Verbindung mit der Adresse URL des Servers hinterlegten Passworts; das Übermitteln des Passworts an einen Authentisierungsserver; das Abrufen des Passworts vom Authentisierungsserver durch die Computereinheit; und das Authentisieren des Benutzers der Computereinheit gegenüber dem Server mittels des Passworts.

Vorzugsweise enthält der von der Computereinheit ausgegebene Code ferner einen öffentlichen Schlüssel $K_{pub}$ der Computereinheit, der zusammen mit der Adresse URL des Servers durch das mobile Endgerät aus dem Code extrahiert wird, und vorzugsweise wird das Passwort mit dem öffentlichen Schlüssel $K_{pub}$ verschlüsselt, bevor dieses an den Authentisierungsserver übermittelt wird.

Gemäß bevorzugter Ausführungsformen der Erfindung umfasst der Schritt des Abrufens des Passworts vom Authentisierungsserver durch die Computereinheit das Entschlüsseln des mit dem öffentlichen Schlüssel $K_{pub}$ verschlüsselten Passworts mittels eines entsprechenden privaten Schlüssels $K_{prv}$ durch die Computereinheit. Vorzugsweise handelt es sich bei dem öffentlichen Schlüssel $K_{pub}$ und dem entsprechenden privaten Schlüssels $K_{prv}$ um ein Einmalschlüsselpaar.

Vorzugsweise wird das Passwort zusammen mit der Adresse URL des Servers an den Authentisierungsserver übermittelt.

Gemäß bevorzugter Ausführungsformen der Erfindung enthält der von der Computereinheit ausgegebene Code ferner ein Identifizierungselement, das zusammen mit der Adresse URL des Servers durch das mobile Endgerät aus dem Code extrahiert wird und zusammen mit dem Passwort an den Authentisierungsserver übermittelt wird.

Vorzugsweise handelt es sich bei dem Code um einen optischen Code, vorzugsweise einen QR-Code, der auf einem Display der Computereinheit dargestellt und von einer Kamera des mobilen Endgeräts eingelesen wird.

Gemäß bevorzugter Ausführungsformen der Erfindung handelt es sich bei dem Sicherheitselement um ein Teilnehmeridentifikationsmodul, das dazu ausgestaltet ist, einen Teilnehmer gegenüber einem Mobilfunknetzwerk zu authentisieren und mit dem Authentisierungsserver über das Mobilfunknetzwerk zu kommunizieren.

Vorzugsweise handelt es sich bei dem Server um einen Webserver, auf dem ein passwortgeschützter Webdienst gehostet ist, auf den die Computereinheit mittels eines Webbrowsers zugreifen kann.

Gemäß einem zweiten Aspekt der Erfindung wird eine Computereinheit zur Authentisierung eines Benutzers gegenüber einem Server bereitgestellt. Dabei ist die Computereinheit dazu ausgestaltet: einen passwortgeschützten Zugriff auf den Server anzufordern; einen Code, der eine Adresse URL des Servers enthält, derart auszugeben, dass der Code von einem mobilen Endgerät erfasst werden kann und die Adresse URL des Servers aus dem Code durch das mobile Endgerät extrahiert werden kann, um ein in einem Sicherheitselement des mobilen Endgeräts in Verbindung mit der Adresse URL des Servers hinterlegtes Passwort zu bestimmen und an einen Authentisierungsserver zu übermitteln; das Passwort vom Authentisierungsserver abzurufen; und den Benutzer der Computereinheit gegenüber dem Server mittels des Passworts zu authentisieren.

Gemäß einem dritten Aspekt der Erfindung wird ein mobiles Endgerät mit einem Sicherheitselement zur Authentisierung eines Benutzers einer Computereinheit gegenüber einem Server bereitgestellt. Dabei ist in dem Sicherheitselement wenigstens ein Passwort hinterlegt, das sich mittels einer Adresse URL des Servers identifizieren lässt, und das mobile Endgerät dazu ausgestaltet: einen von der Computereinheit ausgegebenen Code, der die Adresse URL des Servers enthält, zu erfassen und die Adresse URL des Servers aus dem Code zu extrahieren; das im Sicherheitselement in Verbindung mit der Adresse URL des Servers hinterlegte Passwort zu bestimmen; und das Passwort an einen Authentisierungsserver zu übermitteln.

Bei dem Sicherheitselement des mobilen Endgeräts kann es sich vorzugsweise um einen in Baugröße und Ressourcenumfang reduzierten Computer handeln, der einen Prozessor und mindestens eine Schnittstelle zur Kommunikation mit dem mobilen Endgerät aufweist. Häufig besitzt er keine oder nur eine rudimentäre eigene Nutzerdatenausgabe. Das Sicherheitselement weist insbesondere einen Datenspeicher zum Ablegen von Daten, Informationen, Dateien und/oder Applikationen mit dazugehörigen Variablen ab, wobei Bereiche des Datenspeichers flüchtig oder nichtflüchtig sein können. Der nichtflüchtige Datenspeicher kann insbesondere permanent, beispielsweise als ein Read-Only-Memory, kurz ROM oder semi-permanent sein, beispielsweise als ein Electrically-Erasable-Programmable-Read-Only-Memory, kurz EEPROM, Flashspeicher, Ferroelectric Random Access Memory, kurz FRAM bzw. FeRAM-Speicher oder Magnetoresistive Random Access Memory, kurz MRAM-Speicher.

Gemäß bevorzugter Ausführungsformen der Erfindung ist das Sicherheitselement als ein Teilnehmeridentifikationsmodul in Form einer eUICC oder UICC mit einer darauf laufenden SIM-Applikation ausgestaltet, d.h. als ein Sicherheitselement, das fester Bestandteil des mobilen Endgeräts ist und in einem Mobilfunknetzwerk für die eindeutige und sichere Identifizierung des Benutzers und für die Bereitstellung eines Kommunikationskanals, beispielsweise zum Authentisierungsserver, verwendet wird. Alternativ kann das Sicherheitselement als ein Teilnehmeridentifikationsmodul in Form einer SIM (Subscriber Identity Module) ausgestaltet sein, die dem Fachmann als eine der zurzeit am häufigsten verwendeten Formen eines Sicherheitselements bekannt ist.

Gemäß einer weiteren Alternative kann das Sicherheitselement als eine Kombination aus Hard- und Softwarekomponenten in einem vertrauenswürdigen Teil eines Betriebssystems des mobilen Endgeräts ausgebildet sein, die dem Fachmann auch als gesicherte Laufzeitumgebung ("Trusted Execution Environment"; TEE) bekannt ist. Das Sicherheitselement kann dann beispielsweise innerhalb einer solchen gesicherten Laufzeitumgebung in Form von darin ablaufenden Programmen, sogenannten Trustlets ausgebildet sein.

Gemäß einem vierten Aspekt der Erfindung wird ein System zur Authentisierung eines Benutzers einer Computereinheit gegenüber einem Server mit einer Computereinheit gemäß dem zweiten Aspekt der Erfindung und einem mobilen Endgerät gemäß dem dritten Aspekt der Erfindung bereitgestellt.

Wie der Fachmann erkennt, lassen sich die vorstehend beschriebenen bevorzugten Ausgestaltungen im Rahmen des ersten Aspekts der Erfindung, d.h. im Rahmen des Verfahrens zur Authentisierung gegenüber einem Server, im Rahmen des zweiten Aspekts der Erfindung, d.h. im Rahmen der Computereinheit, im Rahmen des dritten Aspekts der Erfindung, d.h. im Rahmen des mobilen Endgeräts mit einem Sicherheitselement, und im Rahmen des vierten Aspekts der Erfindung, d.h. im Rahmen eines Systems zur Authentisierung eines Benutzers einer Computereinheit gegenüber einem Server, vorteilhaft implementieren.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnungen verwiesen, in denen zeigen:

Fig. 1 eine schematische Darstellung eines Kommunikationssystems mit einer Computereinheit und einem mobilen Endgerät mit einem Sicherheitselement, die unterschiedliche Aspekte der vorliegenden Erfindung illustriert, und

Fig. 2 eine schematische Darstellung eines bevorzugten Ablaufs bei der Authentisierung eines Benutzers gegenüber einem Webserver.

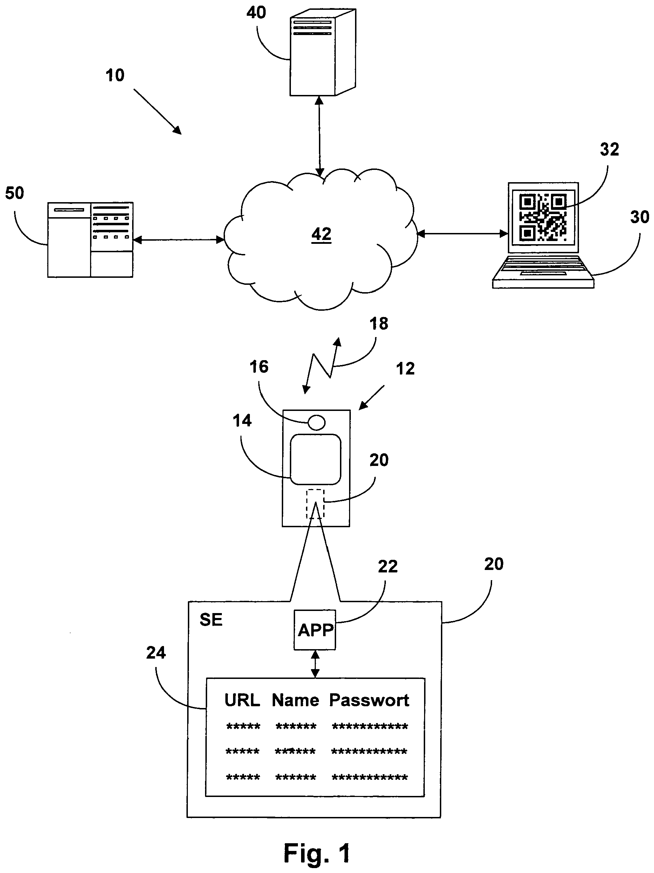

Figur 1 zeigt eine schematische Darstellung der Komponenten eines Kommunikationssystems 10 sowie einige der Kommunikationsverbindungen zwischen diesen Komponenten, die unterschiedliche Aspekte der vorliegenden Erfindung illustriert.

Eine Computereinheit 30, vorzugsweise ein Personal Computer (PC), ein Tablett Computer, ein Notebook, ein Netbook oder dergleichen, ist dazu ausgestaltet, auf einem Display 32 Webseiten darzustellen. Wie dies dem Fachmann bekannt ist, handelt es sich bei Webseiten in der Regel um HTML-Seiten im World Wide Web. Auf der Computereinheit 30 ist ein Webbrowser vorgesehen, wie beispielsweise Internet Explorer, Firefox, Google Chrome, Safari oder dergleichen, mittels dem die Computereinheit 30 über das Kommunikationsnetzwerk 42 auf solche Webseiten zugreifen kann, wie diese beispielsweise auf dem beispielhaften Webserver 40 hinterlegt sind. Vorzugsweise handelt es sich bei dem Kommunikationsnetzwerk 42 um das Internet. Alternativ kann es sich bei dem Kommunikationsnetzwerk 42 um ein Intranet oder dergleichen handeln.

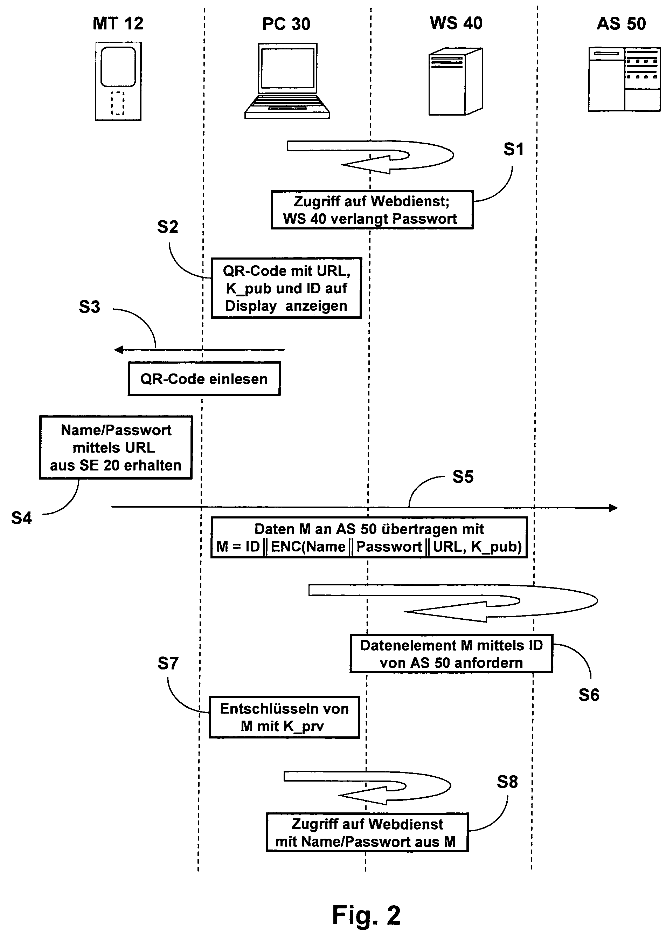

Erfindungsgemäß ist die Computereinheit 30 vorzugsweise derart ausgestaltet, dass bei einem Zugriff mittels des Webbrowsers auf einen beispielsweise auf dem Webserver 40 hinterlegten, passwortgeschützten Webdienst auf dem Display 32 der Computereinheit 30 in Verbindung mit einer Webseite des Webdienstes ein optischer Code dargestellt wird, wie dies nachstehend unter weiterer Bezugnahme auf Figur 2 im Detail beschrieben wird.

In Schritt S1 von Figur 2 erfolgt die Anfrage des Webbrowsers der Computereinheit 30 an den Webserver 40, auf einen passwortgeschützten Webdienst zuzugreifen, der auf dem Webserver 40 hinterlegt bzw. gehostet ist. In Reaktion auf diese Anfrage verlangt der Webserver 40 zur Authentisierung des Benutzers die Eingabe eines Benutzernamens und eines dazugehörigen Passworts, beispielsweise durch Darstellung einer entsprechenden Maske in dem auf der Computereinheit 30 laufenden Webbrowser.

Bei der in Figur 2 dargestellten bevorzugten Ausführungsform der Erfindung wird nun in Schritt S2 ein zweidimensionaler optischer Code in Form eines QR-Codes auf dem Display 32 der Computereinheit 30 dargestellt. Dieser QR-Code kann vom Webbrowser der Computereinheit 30 parallel zur angewählten Webseite angezeigt werden. Vorzugsweise sind in dem auf dem Display 32 dargestellten QR-Code die folgenden Informationen von der Computereinheit 30 codiert: die Adresse URL des in Schritt S1 angefragten passwortgeschützten Webdienstes, ein vorzugsweise vom Webbrowser der Computereinheit 30 erzeugter öffentlicher Schlüssel $K_{pub}$ sowie ein Identifizierungselement ID, vorzugsweise in Form einer Zufallszahl. Vorzugsweise handelt es sich bei der Adresse URL des Webdienstes um eine Adresse in Form eines Uniform Resource Locators. Der Fachmann wird jedoch erkennen, dass statt eines Uniform Resource Locators auch andere Arten von Adressen bzw. "Identifiern" verwendet werden können, um den Webdienst zu identifizieren. Wie dies dem Fachmann bekannt ist, identifiziert und lokalisiert ein Uniform Resource Locator eine Ressource, wie beispielweise einen Webdienst, über die zu verwendende Zugriffsmethode und den Ort der Ressource in einem Kommunikationsnetzwerk, insbesondere dem World Wide Web. Bei dem Schlüssel $K_{pub}$ handelt es sich vorzugsweise um einen zufälligen, öffentlichen, d.h. nicht geheimen Schlüssel, der vom Webbrowser der Computereinheit 30 bei jeder Session neu erzeugt wird. Ein entsprechender privater Schlüssel $K_{prv}$, der zusammen mit dem öffentlichen Schlüssel $K_{pub}$ ein asymmetrisches Schlüsselpaar bildet, verbleibt im Webbrowser der Computereinheit 30. Das Identifizierungselement ID dient zur Identifizierung einer Session. Bei dem Identifizierungselement ID kann es sich beispielsweise um eine aus 32 Bits bestehende Zufallszahl handeln.

In Schritt S3 von Figur 2 werden die im QR-Code codierten Informationen, d.h. URL, $K_{pub}$ und ID, von einem mobilen Endgerät 12 eingelesen, und zwar vorzugsweise mittels der Kameraeinheit 16 des mobilen Endgeräts 12. Bei dem mobilen Endgerät handelt es sich vorzugsweise um ein Smartphone oder eine ähnliche Vorrichtung mit einem Display 14. Zum Einlesen des QR-Codes kann eine entsprechende Applikation auf dem mobilen Endgerät 12 implementiert sein, die aus dem von der Kameraeinheit 16 aufgenommenen Bild des QR-Codes die darin codierten Informationen extrahiert und diese Informationen vorzugsweise an eine Verwaltungsapplikation 22 in einem Sicherheitselement 20 des mobilen Endgeräts 12 weiterleitet. Wie dies in der vergrößerten Darstellung des Sicherheitselements 20 in Figur 1 angedeutet ist, sind in einem Speicher 24 des Sicherheitselements 20 für die jeweilige Adresse (URL) eines Webdiensts die entsprechende vom Benutzer gewählte Kombination aus Benutzername und Passwort sicher hinterlegt. Mittels der aus dem QR-Code extrahierten URL sucht die auf dem Sicherheitselement 20 implementierte Verwaltungsapplikation 22 die für diese URL im Speicher 24 des Sicherheitselements 20 hinterlegte Kombination aus Benutzername und Passwort.

Für den Fall, dass zu der aus dem QR-Code extrahierten URL keine Benutzername/Passwort-Kombination im Speicher 24 des Sicherheitselements 20 hinterlegt ist, kann ein Fehlbedienungszähler im Sicherheitselement 20 erhöht werden. Erreicht dieser Fehlbedienungszähler einen Schwellenwert (z.B. einen Wert von 3), kann vorgesehen sein, dass die Verwaltungsapplikation 22 im Sicherheitselement 20 erst wieder mit einer PIN oder dergleichen freigeschaltet werden muss. Wie der Fachmann erkennen wird, dient eine solche erfindungsgemäße Ausgestaltung dazu, zu verhindern, dass für den Fall, dass das mobile Endgerät 12 abhandenkommt, mit diesem wahllos die im Speicher 24 hinterlegten Passwörter durchprobiert werden können. Der Wert des Fehlbedienungszählers kann niedrig angesetzt werden, da der rechtmäßige Besitzer des mobilen Endgeräts 12 üblicherweise weiß, für welche passwortgeschützten Webdienste er sich mittels eines Benutzernamens und eines Passworts registriert hat.

Für den Normalfall, dass zu der aus dem QR-Code extrahierten URL eine Benutzername/Passwort-Kombination im Speicher 24 des Sicherheitselements 20 hinterlegt ist, wird diese Benutzername/Passwort-Kombination von der Verwaltungsapplikation 22 mittels der URL ermittelt und ausgelesen (siehe Schritt S4). Vorzugsweise werden in Schritt S5 von Figur 2 diese Daten, d.h. der Benutzername und das entsprechende Passwort, von der Verwaltungsapplikation 22 mit der dazugehörigen URL verknüpft, vorzugsweise mittels einer Konkatenation, und das daraus resultierende Datenelement wird mit dem öffentlichen Schlüssel $K_{pub}$ verschlüsselt. Ferner wird mit dem Ergebnis dieser Verschlüsselung das ebenfalls aus dem QR-Code extrahierte Identifizierungselement ID verknüpft, wiederum vorzugsweise mittels einer Konkatenation. Das aus diesen Operationen resultierende Datenelement M wird an einen Authentisierungsserver 50 geschickt, wobei

$$M = ID \,\|\, ENC(Benutzername \,\|\, Passwort \,\|\, URL, K_{pub}).$$

Dabei steht das Symbol "‖" für eine Konkatenation und $ENC(X, K_{pub})$ bezeichnet das Ergebnis der Verschlüsselung des Datenelements X mit dem Schlüssel $K_{pub}$. Vorzugsweise kann das mobile Endgerät 12 über das Kommunikationsnetzwerk 42 mit dem Authentisierungsserver 50 kommunizieren, beispielsweise über den in Figur 1 dargestellten OTA-Datenkanal 18. Alternativ oder zusätzlich kann das mobile Endgerät 12 über ein anderes Kommunikationsnetzwerk mit dem Authentisierungsserver 50 kommunizieren, beispielsweise über ein Mobilfunknetzwerk.

Wie vorstehend beschrieben, werden die zu einer URL im Speicher 24 des Sicherheitselements 20 hinterlegten Daten, d.h. der Benutzername und das Passwort, in Schritt S5 von Figur 2 vor der Verschlüsselung mit dem öffentlichen Schlüssel $K_{pub}$ vorzugsweise mit dieser URL konkateniert, damit der Benutzername und das Passwort im weiteren Verlauf des erfindungsgemäßen Verfahrens auch der richtigen Webseite, d.h. der richtigen URL, zugeordnet werden können. Dies ist insbesondere dann vorteilhaft, wenn sich der Benutzer in sehr kurzen Zeitabständen bei mehreren passwortgeschützten Webdiensten anmelden möchte. Hinsichtlich Schritt S5 von Figur 2 wird der Fachmann erkennen, dass es prinzipiell auch ausreichen würde, lediglich das Passwort zu verschlüsseln und den Benutzernamen und die URL zusammen mit dem Identifizierungselement ID im Klartext zu übertragen.

Der Authentisierungsserver 50 hat im Wesentlichen die Funktion, das von dem mobilen Endgerät 12 in Schritt S5 übertragene Datenelement M, in dem der Benutzername und das Passwort für den durch die URL identifizierten Webdienst in verschlüsselter Form vorliegen, vorzuhalten. Wie der Fachmann erkennen wird, ist es nicht notwendig, dass der Authentisierungsserver 50 vertrauenswürdig ist, da die sicherheitskritischen Daten im Datenelement M in verschlüsselter Form auf dem Authentisierungsserver 50 vorliegen, wobei vorzugsweise bei jeder Session ein neu generierter öffentlicher Schlüssel $K_{pub}$ verwendet wird. Es ist auch kein besonders großer Speicherplatz auf dem Authentisierungsserver 50 erforderlich, da das Datenelement M in der Regel weniger als 1 kB Speicherplatz belegen sollte und allenfalls für ungefähr 60 Sekunden benötigt werden sollte, wie dies nachstehend im Detail beschrieben wird.

In Schritt S6 von Figur 2 fordert die Computereinheit 30 das Datenelement M vom Authentisierungsserver 50 an. Hierzu übermittelt die Computereinheit 30 dem Authentisierungsserver 50 das Identifizierungselement ID, das in Schritt S2 von Figur 2 von der Computereinheit 30 in den QR-Code codiert worden ist. Anhand des Identifizierungselements ID kann der Authentisierungsserver 50 das dazugehörige Datenelement M bestimmen und an die Computereinheit 30 weiterleiten. Wie der Fachmann erkennen wird, kann der Schritt des Anforderns des Datenelements M durch die Computereinheit 30 in Schritt S6 von Figur 2 auch zeitlich vor dem Schritt S5 erfolgen, beispielweise im Wesentlichen gleichzeitig mit Schritt S2.

In Schritt S7 von Figur 2 wird der verschlüsselte Teil des Datenelements M, das im vorhergehenden Schritt S6 vom Authentisierungsserver 50 erhalten worden ist, von der Computereinheit 30 entschlüsselt, und zwar mittels des privaten Schlüssels $K_{prv}$, der mit dem öffentlichen Schlüssel $K_{pub}$, der zur Verschlüsselung des Benutzernamens und Passworts in Schritt S5 verwendet worden ist, ein asymmetrisches Schlüsselpaar bildet.

Als Ergebnis von Schritt S7 von Figur 2 stehen der Computereinheit 30 nunmehr der Benutzername, das Passwort und die dazugehörige URL zur Verfügung. Mittels dieser Daten kann die Computereinheit 30 in Schritt S8 von Figur 2 auf den zu der URL gehörigen, passwortgeschützten Webdienst zugreifen, der auf dem beispielhaften Webserver 40 hinterlegt ist. Es ist beispielsweise denkbar, dass hierzu der Webbrowser der Computereinheit 30 entsprechend eingerichtet ist, beispielsweise indem dieser automatisch die Eingabefelder für den Benutzernamen und das Passwort auf der Webseite des durch die URL identifizierten Webdienstes ausfüllt und ggf. an den Webserver 40 absendet, wodurch der Benutzer "vollautomatisch" auf den entsprechenden Webdienst zugreifen kann, der auf dem Webserver 40 gehostet ist.

Der Fachmann wird erkennen, dass die vorstehend beschriebenen erfindungsgemäßen Lösungen eine sichere und benutzerfreundliche Speicherung von Benutzernamen und entsprechenden Passwörtern im Speicher 24 des Sicherheitselements 20 ermöglicht. Da der Benutzer sich keine Benutzernamen und Passwörter mehr merken muss, können sehr lange und komplexe, d.h. sichere, Passwörter verwendet werden. Ferner verlassen die Passwörter das Sicherheitselement 20 niemals im Klartext.

Der Fachmann wird ferner erkennen, dass zur Implementierung einer erfindungsgemäßen Lösung keinen Änderungen an bestehenden Webdiensten erforderlich sind, da lediglich die Computereinheit 30 und das mobile Endgerät 12 angepasst werden müssen. Mit anderen Worten: eine erfindungsgemäße Lösung kann im Wesentlichen transparent für jeden Webdienst eingesetzt werden, der eine Authentisierung mittels Benutzername und Passwort erfordert.

Es ist denkbar, dass zur Darstellung des QR-Codes auf dem Display 32 der Computereinheit 30 in Schritt S2 von Figur 2 ein herkömmlicher Webbrowser, wie z.B. Internet Explorer, Firefox, Google Chrome, Safari oder dergleichen, mit einem geeigneten Plug-In verwendet wird, das die Erzeugung des QR-Codes und die weitere Abwicklung der Passworteingabe übernimmt. Wie der Fachmann erkennen wird, benötigt ein solches Plug-in keine Personalisierung, so dass dieses an keinen speziellen Benutzer und an keine spezielle Computereinheit geknüpft ist und beispielsweise auch auf einer öffentlichen Computereinheit, beispielsweise einem öffentlichen PC, eingesetzt werden kann. Es ist ebenfalls denkbar, dass anstelle eines Plug-Ins für einen Webbrowser eine separate Applikation auf der Computereinheit 30 installiert ist, welche dieselbe Funktionalität wie das Plug-In bereitstellt. Gemäß einer weiteren Alternative ist es denkbar, dass ein Webbrowser von vornherein so ausgestaltet ist, bei passwortgeschützten Webdiensten einen QR-Code zu erzeugen und die weitere Abwicklung der Passworteingabe zu übernehmen, wie dies vorstehend beschrieben worden ist.

Gemäß weiterer bevorzugter Ausführungsformen der Erfindung kann vorgesehen sein, dass die auf dem Sicherheitselement 20 implementierte Verwaltungsapplikation 22, die dazu ausgestaltet ist, mittels der aus dem QR-Code extrahierten URL die für diese URL im Speicher 24 des Sicherheitselements 20 hinterlegte Kombination aus Benutzername und Passwort heraus zu suchen, ferner dazu ausgestaltet ist, die Aufnahme von neuen Benutzernamen und Passwörter in den Speicher 24 des Sicherheitselements 20 zu verwalten. Es ist beispielsweise denkbar, dass die Verwaltungsapplikation 22 (ggf. zusammen mit einer entsprechenden Applikation auf dem mobilen Endgerät) dem Benutzer auf dem Display 14 des mobilen Endgeräts 12 eine graphische Benutzeroberfläche anzeigt, damit dieser seine Benutzernamen und Passwörter verwalten und insbesondere neue Benutzernamen und Passwörter für neue passwortgeschützte Webdienste eingeben kann. Zur Steigerung der Sicherheit kann hierzu die Verwaltungsapplikation 22 derart ausgestaltet sein, dass bei der Wahl eines bereits benutzten Passworts eine Sicherheitswarnung ausgegeben wird oder von vornherein nur die Verwendung unterschiedlicher Passwörter für unterschiedlichen Webdienste erlaubt wird. Gemäß einer weiteren Alternative kann die Verwaltungsapplikation 22 selbst dazu ausgestaltet sein, ein sicheres Passwort für einen neuen Webdienst zu erzeugen.

Gemäß weiterer bevorzugter Ausführungsformen der Erfindung kann, falls gewünscht, für besonders sicherheitskritische Dienste eine zusätzliche Master-PIN auf dem Sicherheitselement 20 implementiert werden, die der Benutzer während des Authentisierungsvorgangs auf seinem mobilen Endgerät 12 eingibt, um sich gegenüber dem Sicherheitselement zu authentisieren, wie dies zur Verwendung von Mobilfunknetzen durch mobile Endgeräte üblich ist.

Gemäß bevorzugter Ausführungsformen der Erfindung ist das Sicherheitselement 20 als ein Teilnehmeridentifikationsmodul in Form einer eUICC oder UICC mit einer darauf laufenden SIM-Applikation ausgestaltet, d.h. als ein Sicherheitselement, das fester Bestandteil des mobilen Endgeräts 12 ist und in einem Mobilfunknetzwerk für die eindeutige und sichere Identifizierung des Benutzers und für die Bereitstellung eines Kommunikationskanals, beispielsweise zum Authentisierungsserver 50, verwendet wird. Geeignete Mobilfunknetzwerke sind beispielsweise Mobilfunknetzwerke gemäß dem GSM-Standard ("Global Standard for Mobile Communications"), z.B. Mobilfunknetzwerke der dritten Generation (3GPP), wie UMTS (Universal Mobile Telecommunications System), Mobilfunknetzwerke der nächsten bzw. vierten Generation (4G), wie LTE (Long Term Evolution), sowie andere Mobilfunknetzwerke, wie CDMA, GPRS (General Packet Radio Service) und dergleichen.

Alternativ kann das Sicherheitselement 20 als ein Teilnehmeridentifikationsmodul in Form einer SIM (Subscriber Identity Module) ausgestaltet sein, die dem Fachmann als eine der zurzeit am häufigsten verwendeten Formen eines Sicherheitselements bekannt ist. Der Fachmann wird jedoch erkennen, dass andere Arten von Sicherheitselementen in Form von Teilnehmeridentifikationsmodulen, die je nach Generation und Typ des zugrunde liegenden Mobilfunkkommunikationssystemstandards als USIM, R-UIM, ISIM und dergleichen bezeichnet werden, ebenfalls von der vorliegenden Erfindung umfasst werden.

Gemäß weiterer bevorzugter Ausführungsformen der Erfindung kann das Sicherheitselement 20 in Form eines Teilnehmeridentifikationsmoduls als eine Kombination aus Hard- und Softwarekomponenten in einem vertrauenswürdigen Teil eines Betriebssystems des mobilen Endgeräts 12 ausgebildet sein, die dem Fachmann auch als gesicherte Laufzeitumgebung ("Trusted Execution Environment"; TEE) bekannt ist. Das Sicherheitselement 20 in Form eines Teilnehmeridentifikationsmoduls kann dann beispielsweise innerhalb einer solchen gesicherten Laufzeitumgebung des mobilen Endgeräts 12 in Form von darin ablaufenden Programmen, sogenannten Trustlets ausgebildet sein.

Obgleich bei der vorstehend im Zusammenhang mit Figur 2 beschriebenen bevorzugten Ausführungsform der Erfindung auf dem Display 32 der Computereinheit 30 ein QR-Code dargestellt wird, erkennt der Fachmann, dass erfindungsgemäß andere Codes eingesetzt werden können, beispielsweise ein Barcode. Erfindungsgemäß ist es auch vorstellbar, dass statt eines optischen Codes eine andere Art von Code verwendet wird, z.B. ein Audiocode. Wesentlich für die Erfindung ist lediglich, dass mittels dieses Codes Informationen von der Computereinheit 30 zum mobilen Endgerät 12 und somit zum Sicherheitselement 20 übertragen werden können.

**Patentansprüche**

1. Verfahren zur Authentisierung eines Benutzers einer Computereinheit (30) gegenüber einem Server (40), wobei das Verfahren die folgenden Schritte umfasst:

   das Anfordern eines passwortgeschützten Zugriffs auf den Server (40) durch die Computereinheit (30);
   das Ausgeben eines Codes durch die Computereinheit (30), der eine Adresse (URL) des Servers (40) enthält;
   das Erfassen des Codes und das Extrahieren der Adresse, URL, des Servers (40) aus dem Code durch ein mobiles Endgerät (12);
   das Bestimmen eines in einem Sicherheitselement (20) des mobilen Endgeräts (12) in Verbindung mit der Adresse, URL, des Servers (40) hinterlegten Passworts;
   das Übermitteln des Passworts an einen Authentisierungsserver (50);
   das Authentisieren des Benutzers der Computereinheit (30) gegenüber dem Server (40) mittels des Passworts;
   **gekennzeichnet durch**
   das Abrufen des Passworts vom Authentisierungsserver (50) durch die Computereinheit (30),
   wobei der von der Computereinheit (30) ausgegebene Code ferner einen öffentlichen Schlüssel, $K_{pub}$, der Computereinheit (30) enthält, der zusammen mit der Adresse, URL, des Servers (40) durch das mobile Endgerät (12) aus dem Code extrahiert wird, und wobei das Passwort mit dem öffentlichen Schlüssel, $K_{pub}$, verschlüsselt wird, bevor dieses an den Authentisierungsserver (50) übermittelt wird,
   wobei der Schritt des Abrufens des Passworts vom Authentisierungsserver (50) durch die Computereinheit (30) das Entschlüsseln des mit dem öffentlichen Schlüssel, $K_{pub}$, verschlüsselten Passworts mittels eines entsprechenden privaten Schlüssels, $K_{prv}$, durch die Computereinheit (30) umfasst.

2. Verfahren nach Anspruch 1, wobei das Passwort zusammen mit der Adresse, URL, des Servers (40) an den Authentisierungsserver (50) übermittelt wird.

3. Verfahren nach Anspruch 1, wobei der von der Computereinheit (30) ausgegebene Code ferner ein Identifizierungselement, ID, enthält, das zusammen mit der Adresse, URL, des Servers (40) durch das mobile Endgerät (12) aus dem Code extrahiert wird und zusammen mit dem Passwort an den Authentisierungsserver (50) übermittelt wird.

4. Verfahren nach einem der Ansprüche 1 bis 3, wobei es sich bei dem Code um einen optischen Code, vorzugsweise einen QR-Code handelt, der auf einem Display (32) der Computereinheit (30) dargestellt und von einer Kamera (16) des mobilen Endgeräts (12) eingelesen wird.

5. Verfahren nach einem der Ansprüche 1 bis 3, wobei es sich bei dem Sicherheitselement (20) um ein Teilnehmeridentifikationsmodul handelt, das dazu ausgestaltet ist, einen Teilnehmer gegenüber einem Mobilfunknetzwerk zu authentisieren und mit dem Authentisierungsserver (50) über das Mobilfunknetzwerk zu kommunizieren.

6. Verfahren nach einem der Ansprüche 1 bis 3, wobei es sich bei dem Server (40) um einen Webserver handelt, auf dem ein passwortgeschützter Webdienst gehostet ist, auf den die Computereinheit (30) mittels eines Webbrowsers zugreifen kann.

## Claims

1. A method for authenticating a user of a computer unit (30) to a server (40), wherein the method comprises the following steps of:

   requesting a password-protected access to the server (40) by the computer unit (30);
   outputting a code which contains an address (URL) of the server (40) by the computer unit (30);
   detecting the code and extracting the address, URL, of the server (40) from the code by a mobile terminal (12);
   determining a password stored in a security element (20) of the mobile terminal (12) in connection with the address, URL, of the server (40);
   transmitting the password to an authentication server (50);
   authenticating the user of the computer unit (30) to the server (40) by means of the password;

   **characterized by**
   retrieving the password from the authentication server (50) by the computer unit (30),
   wherein the code output by the computer unit (30) further contains a public key, $K_{pub}$, of the computer unit (30), which is extracted from the code by the mobile terminal (12) together with the address, URL, of the server (40), and
   wherein the password is encrypted with the public key, $K_{pub}$, before its transmission to the authentication server (50),
   wherein the step of retrieving the password from the authentication server (50) by the computer unit (30) comprises decrypting the password encrypted with the public key, $K_{pub}$, by means of a corresponding private key, $K_{prv}$, by the computer unit (30).

2. The method according to claim 1, wherein the password is transmitted to the authentication server (50) together with the address, URL, of the server (40).

3. The method according to claim 1, wherein the code output by the computer unit (30) further contains an identifying element, ID, which is extracted from the code together with the address, URL, of the server (40) by the mobile terminal (12), and is transmitted to the authentication server (50) together with the password.

4. The method according to any one of claims 1 to 3, wherein the code is an optical code, preferably a QR code, represented on a display (32) of the computer unit (30) and read by a camera (16) of the mobile terminal (12).

5. The method according to any one of claims 1 to 3, wherein the security element (20) is a subscriber identification module which is configured to authenticate a subscriber to a mobile communication network and to communicate with the authentication server (50) via the mobile communication network.

6. The method according to any one of claims 1 to 3, wherein the server (40) is a web server on which a password-protected web service is hosted, which the computer unit (30) can access by means of a web browser.

## Revendications

1. Procédé d'authentification d'un utilisateur d'une unité informatique (30) vis-à-vis d'un serveur (40), le procédé comprenant les étapes suivantes :

   la demande d'un accès, protégé par mot de passe, au serveur (40) par l'unité informatique (30) ;
   la délivrance d'un code par l'unité informatique (30), lequel contient une adresse (URL) du serveur (40) ;
   la saisie du code et l'extraction de l'adresse, URL, du serveur (40) à partir du code par un terminal (12) mobile ;
   la détermination d'un mot de passe enregistré dans un élément de sécurité (20) du terminal (12) mobile en relation avec l'adresse, URL, du serveur (40) ;
   la transmission du mot de passe à un serveur d'authentification (50) ;
   l'authentification de l'utilisateur de l'unité informatique (30) vis-à-vis du serveur (40) au moyen du mot de passe ;
   **caractérisé par**

   la consultation du mot de passe depuis le serveur d'authentification (50) par l'unité informatique (30),
   cependant que le code délivré par l'unité informatique (30) contient en outre une clé publique, $K_{pub}$, de l'unité informatique (30), cette clé étant extraite, en même temps que l'adresse, URL, du serveur (40), par le terminal (12) mobile à partir du code, et cependant que le mot de passe est chiffré avec la clé publique, $K_{pub}$, avant d'être transmis au serveur d'authentification (50),

cependant que l'étape de la consultation du mot de passe depuis le serveur d'authentification (50) par l'unité informatique (30) comprend le déchiffrement du mot de passe chiffré avec la clé publique, $K_{pub}$, au moyen d'une clé privée correspondante, $K_{prv}$, par l'unité informatique (30).

2. Procédé selon la revendication 1, cependant que le mot de passe est transmis en même temps que l'adresse, URL, du serveur (40), au serveur d'authentification (50).

3. Procédé selon la revendication 1, cependant que le code délivré par l'unité informatique (30) contient en outre un élément d'identification, ID, qui, en même temps que l'adresse, URL, du serveur (40), est extrait par le terminal (12) mobile à partir du code et est transmis en même temps que le mot de passe au serveur d'authentification (50).

4. Procédé selon une des revendications de 1 à 3, cependant que le code consiste en un code optique, de préférence un code QR, qui est représenté sur un écran (32) de l'unité informatique (30) et est lu par une caméra (16) du terminal (12) mobile.

5. Procédé selon une des revendications de 1 à 3, cependant que l'élément de sécurité (20) consiste en un module d'identification d'abonné conçu pour authentifier un abonné vis-à-vis d'un réseau radio mobile et pour communiquer avec le serveur d'authentification (50) par l'intermédiaire du réseau radio mobile.

6. Procédé selon une des revendications de 1 à 3, cependant que le serveur (40) consiste en un serveur web sur lequel est hébergé un service web, protégé par mot de passe, auquel peut accéder l'unité informatique (30) au moyen d'un navigateur web.

**Fig. 1**

**MT 12**          **PC 30**          **WS 40**          **AS 50**

S1

Zugriff auf Webdienst;
WS 40 verlangt Passwort

S2

QR-Code mit URL,
K_pub und ID auf
Display anzeigen

S3

QR-Code einlesen

Name/Passwort
mittels URL
aus SE 20 erhalten

S5

S4

Daten M an AS 50 übertragen mit
M = ID ∥ ENC(Name ∥ Passwort ∥ URL, K_pub)

Datenelement M mittels ID
von AS 50 anfordern

S7

S6

Entschlüsseln von
M mit K_prv

S8

Zugriff auf Webdienst
mit Name/Passwort aus M

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009101549 A
- WO A2 A
- EP 2421217 A1
- US 20100037046 A1
- US 20110219427 A1